# EUROPÄISCHE PATENTSCHRIFT

(11) **EP 4 396 395 B1**
(45) Veröffentlichungstag und Bekanntmachung des Hinweises auf die Patenterteilung: **23.04.2025**
(21) Anmeldenummer: 23731146.9
(22) Anmeldetag: 02.06.2023
(51) Int. Cl.: C25B 11/03, C25B 11/052, H01M 4/64

(54) **VERFAHREN ZUM HERSTELLEN EINER METALLISCHEN TRÄGERSTRUKTUR FÜR EINE ELEKTRODE, METALLISCHE TRÄGERSTRUKTUR UND ELEKTRODE**
METHOD FOR PRODUCING A METALLIC CARRIER STRUCTURE FOR AN ELECTRODE, METALLIC CARRIER STRUCTURE, AND ELECTRODE
PROCÉDÉ DE FABRICATION D'UNE STRUCTURE DE SUPPORT MÉTALLIQUE POUR UNE ÉLECTRODE, STRUCTURE DE SUPPORT MÉTALLIQUE ET ÉLECTRODE

(30) Priorität: 03.06.2022 DE 102022114060
(43) Veröffentlichungstag der Anmeldung: 10.07.2024
(73) Patentinhaber: KS Gleitlager GmbH, 68789 St. Leon-Rot (DE)
(72) Erfinder: TREUTNER, Stefan, 69168 Wiesloch (DE)
(74) Vertreter: DREISS Patentanwälte PartG mbB
(86) Internationale Anmeldenummer: PCT/EP2023/064770
(87) Internationale Veröffentlichungsnummer: WO 2023/232986

(56) Entgegenhaltungen:
- EP-A1- 0 839 933
- WO-A2-2012/144651
- GB-A- 896 912
- JP-A- H0 456 792
- US-A- 5 804 055
- US-A1- 2016 049 677

## Beschreibung

Die vorliegende Erfindung betrifft ein Verfahren zum Herstellen einer metallischen Trägerstruktur für eine Elektrode, wobei die Trägerstruktur aus Streckmetallgitter oder Drahtgewebe mit Öffnungen ausgebildet ist. Zudem betrifft die Erfindung eine mit dem erfindungsgemäßen Verfahren hergestellte metallische Trägerstruktur und eine Elektrode, die eine erfindungsgemäße metallische Trägerstruktur aufweist.

Verfahren zur Herstellung einer metallischen Trägerstruktur aus einem Flachmaterialabschnitt eines Streckmetallgitters sind beispielsweise aus der DE 101 19 841 A1 und aus der US 5 804 055A bekannt.

DE 203 06 641 U1 offenbart eine Sintermetallfiltertasche gebildet aus einem gesinterten Metallblechstreifen zur Ausbildung eines Filterkörpers eines Abgaspartikelfilters. Vor dem Verschweißen oder Verlöten von Rändern des Sintermetallblechstreifens werden diese Ränder von ursprünglich etwa 50 % Porenvolumen auf etwa 85 % oder 90 % Porenvolumen verdichtet, um einen verstärkten Randabschnitt auszubilden, dem statische Eigenschaften zukommen und der sich durch Schweißen oder Löten verbinden lässt.

Ausgehend von dem eingangs genannten Verfahren liegt der Erfindung die Aufgabe zu Grunde eine großflächige metallische Trägerstruktur für eine Elektrode in prozesstechnisch einfacher Weise zu realisieren.

Diese Aufgabe wird durch ein Verfahren mit den Merkmalen des Anspruchs 1 gelöst. Vorteilhafte Ausführungsformen der Erfindung finden sich in den Unteransprüchen.

Mit der vorliegenden Erfindung wird also vorgeschlagen, dass die metallische Trägerstruktur für eine Elektrode aus Flachmaterialabschnitten eines Streckmetallgitters oder Drahtgewebes mit Öffnungen ausgebildet ist, wobei wenigstens zwei Flachmaterialabschnitte in einem jeweiligen Randbereich miteinander verschweißt werden, umfassend die folgenden Schritte:
Umformen der miteinander zu verschweißenden Randbereiche der Flachmaterialabschnitte durch Ausüben von Druck orthogonal auf diese Randbereiche, insbesondere durch Walzen oder Prägen, um durch plastische Verformung in den Randbereichen eine Streckgitterstruktur oder Gewebestruktur zumindest nahezu aufzulösen, sodass die Öffnungen im Randbereich durch eine Materialverformung im Wesentlichen geschlossen werden,

Anordnen der Flachmaterialabschnitte aneinander, sodass die umgeformten Randbereiche der Flachmaterialabschnitte einander überlappen oder auf Stoß aneinander anliegen, und

Verschweißen der einander überlappenden oder auf Stoß aneinander anliegenden Randbereiche miteinander, um die Trägerstruktur zu erhalten.

Das den Flachmaterialabschnitt bildende Streckmetallgitter wird typischerweise aus einem Metallband hergestellt, indem das Metallband mit Schnitten und/oder Schlitzen versehen und daran anschließend gestreckt und/oder gewalzt wird, sodass Öffnungen und damit eine Streckgitterstruktur ausgebildet werden.

Mit dem erfindungsgemäßen Verfahren werden bei dem Umformen der miteinander zu verschweißenden Randbereiche der Flachmaterialabschnitte die Öffnungen im Randbereich durch die Materialverformung im Wesentlichen geschlossen; dies bedeutet, dass eine lichte Öffnungsfläche der Öffnungen nach dem Verformen kleiner 10 %, insbesondere kleiner 5 % der ursprünglichen Öffnungsfläche beträgt und wobei die Öffnungen vorzugsweise vollständig geschlossen sind. Es erweist sich als vorteilhaft, wenn die Öffnungen des Streckmetallgitters oder Drahtgewebes vor dem Umformen bzw. außerhalb der Umformung bei Betrachtung orthogonal zur flächenhaften Erstreckung des Streckmetallgitters oder Drahtgewebes eine lichte Querschnittsfläche mit einer kleinsten Abmessung von wenigstens 1,0 mm, insbesondere von wenigstens 2,0 mm aufweisen.

Zum Umformen der miteinander zu verschweißenden Randbereiche kann beispielsweise durch eine oder mehrere Walzen oder Prägestempel einseitig oder beidseitig Druck auf die miteinander zu verschweißenden Randbereiche ausgeübt werden. Der Druck muss ausreichend hoch sein, damit eine plastische Verformung in diesen Randbereichen der Flachmaterialabschnitte erfolgt und die Öffnungen im Randbereich durch die Materialverformung im Wesentlichen geschlossen werden.

Die miteinander zu verschweißenden Randbereiche können eine Breite von mindestens 2 mm, insbesondere mindestens 4 mm, insbesondere mindestens 6 mm oder insbesondere mindestens 8 mm und insbesondere höchstens 20 mm, insbesondere höchstens 15 mm, insbesondere höchstens 12 mm oder insbesondere höchstens 10 mm aufweisen.

Die geschaffenen im Wesentlichen geschlossenen Randbereiche der Flachmaterialabschnitte können in einfacher Weise einander überlappend oder auf Stoß aneinander angeordnet werden. Dabei ergeben sich flächenhafte oder durchgehende Kontaktstellen zwischen den umgeformten Randbereichen, um diese miteinander zu verschweißen.

Das erfindungsgemäße Verfahren ermöglicht somit eine prozesssichere Fertigung großflächiger Trägerstrukturen für Elektroden.

Das Verschweißen der Flachmaterialabschnitte kann beispielsweise mittels Laserstrahlschweißen oder Rollnahtschweißen durchgeführt werden.

In einer Ausführungsform des erfindungsgemäßen Verfahrens wird eine Dicke der umzuformenden und miteinander zu verschweißenden Randbereiche der Flachmaterialabschnitte beim Umformen um wenigstens 50%, insbesondere wenigstens 60% reduziert. Die Dicke ist als Abstand zwischen einer eine oberen Seite und einer eine untere Seite des hergestellten Flachmaterialabschnitts berührenden Ebene definiert und ist über den gesamten Flachmaterialabschnitt nahezu gleichbleibend. Die Reduzierung der Dicke der miteinander zu verschweißenden Randbereiche kann von der oberen und/oder der unteren Seite des Flachmaterialabschnitts her und somit einseitig oder beidseitig erfolgen. Die Reduzierung der Dicke der miteinander zu verschweißenden Randbereiche ist abhängig von der lichten Öffnungsfläche der Öffnungen des Flachmaterialabschnitts. Je größer die Öffnungsfläche der Öffnungen ist, desto weiter muss die Dicke der Randbereiche reduziert werden, um die Öffnungen beim Umformen im Wesentlichen zu schließen.

Gemäß einer weiteren vorteilhaften Ausführungsform werden die miteinander zu verschweißenden Randbereiche derart umgeformt, dass der umgeformte Randbereich zu einem restlichen Flachmaterialabschnitt einseitig eine Abstufung bildet. Beispielsweise wirken eine Walze oder ein Prägestempel von einer Seite auf die miteinander zu verschweißenden Randbereiche ein und auf einer Gegenseite wird lediglich Gegengehalten.

Es erweist sich als vorteilhaft, wenn die umgeformten Randbereiche derart ausgebildet sind und aneinander überlappend angeordnet werden, dass deren resultierende Gesamtdicke nicht größer ist, als eine Dicke unverformter Bereiche der miteinander zu verschweißenden Flachmaterialabschnitte. Dies ermöglicht es die Trägerstruktur mit gleichförmiger Dicke herzustellen.

Nach einer Ausführungsform der Erfindung erweist es sich als vorteilhaft, wenn mehrere Flachmaterialabschnitte matrixartig mit jeweiligen umgeformten Randbereichen aneinander geschweißt werden, sodass eine matrixartige metallische Trägerstruktur erhalten wird. Durch mehrfaches Ausführen des erfindungsgemäßen Verfahrens können an sich beliebig großflächige Trägerstrukturen mit einer beliebigen Form hergestellt werden, zum Beispiel einer quadratischen, einer rechteckigen oder einer wabenförmigen Form.

Es erweist sich als vorteilhaft, wenn die miteinander zu verschweißenden Flachmaterialabschnitte mit einer Ni-, insbesondere NiAl-Legierung einseitig oder beidseitig beschichtet sind oder erst nach dem Umformen oder nach dem Verschweißen der Randbereiche beschichtet werden.

Gegenstand der Erfindung ist auch eine metallische Trägerstruktur für eine Elektrode hergestellt durch das erfindungsgemäße Verfahren mit einer Breite der miteinander verschweißten Flachmaterialabschnitte von mindestens 0,8 m, insbesondere mindestens 1,0 m, insbesondere mindestens 1,2 m. Somit lassen sich Trägerstrukturen aus einzelnen Flachmaterialabschnitten erhalten, die für eine herzustellende Elektrode geeignet sind.

Weiter ist Gegenstand der Erfindung eine Elektrode mit einer erfindungsgemäßen metallischen Trägerstruktur.

Weitere Merkmale und Vorteile der Erfindung sind Gegenstand der nachfolgenden Beschreibung und der zeichnerischen Darstellung von Ausführungsbeispielen. Es zeigen:
- Fig. 1a: Draufsicht auf einen schematisch dargestellten Flachmaterialabschnitt eines Streckmetallgitters;
- Fig. 1b: Draufsicht auf einen schematisch dargestellten Flachmaterialabschnitt eines Drahtgewebes;
- Fig. 2: Draufsicht auf zwei schematisch dargestellte Flachmaterialabschnitte mit umgeformten miteinander zu verschweißenden Randbereichen;
- Fig. 3: Schnittansicht A-A nach einer ersten Ausführungsform einer Anordnung zweier miteinander auf Stoß zu verschweißenden Flachmaterialabschnitte;
- Fig. 4: eine Fig. 3 entsprechende Ansicht im angedeutet verschweißten Zustand;
- Fig. 5: Schnittansicht A-A nach einer zweiten Ausführungsform einer Anordnung zweier miteinander überlappend zu verschweißenden Flachmaterialabschnitte;
- Fig. 6: eine Fig. 5 entsprechende Ansicht im angedeutet verschweißten Zustand;
- Fig. 7: Draufsicht auf vier miteinander verschweißte Flachmaterialabschnitte;

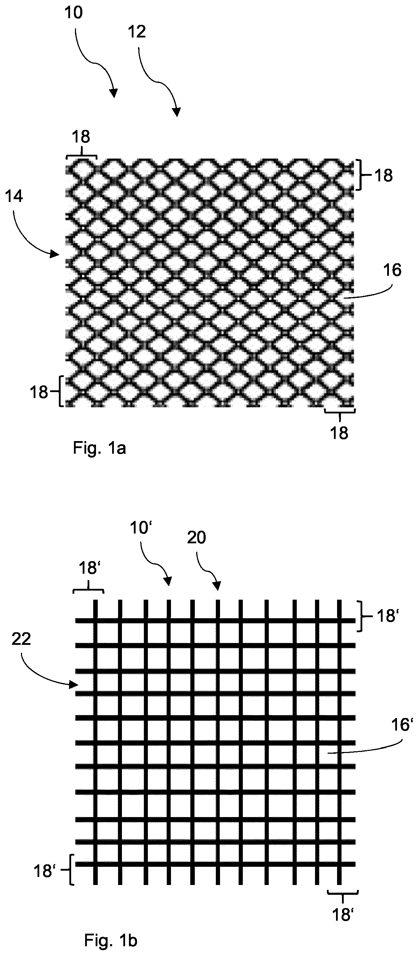

Fig. 1a zeigt eine Draufsicht auf einen schematisch dargestellten quadratischen Flachmaterialabschnitt 10 eines Streckmetallgitters 12 mit einer Streckgitterstruktur 14 mit Öffnungen 16. Die Öffnungen sind 16 sind makroskopisch ausgebildet und wahrnehmbar, was sich aus der Herstellung der Streckgitterstruktur ergibt. Der Flachmaterialabschnitt 10 des Streckmetallgitters 12 weist umlaufend vier (in Fig. 1a symbolisch angedeutete) Randbereiche 18 auf.

Fig. 1b zeigt eine Draufsicht auf einen schematisch dargestellten quadratischen Flachmaterialabschnitt 10' eines Drahtgewebes 20 mit einer Gewebestruktur 22 mit Öffnungen 16'. Der Flachmaterialabschnitt 10' des Drahtgewebes 20 weist umlaufend vier (in Fig. 1b symbolisch angedeutete) Randbereiche 18' auf.

Nachfolgend wird das erfindungsgemäße Verfahren anhand Flachmaterialabschnitten 10 des Streckmetallgitters 12 erläutert.

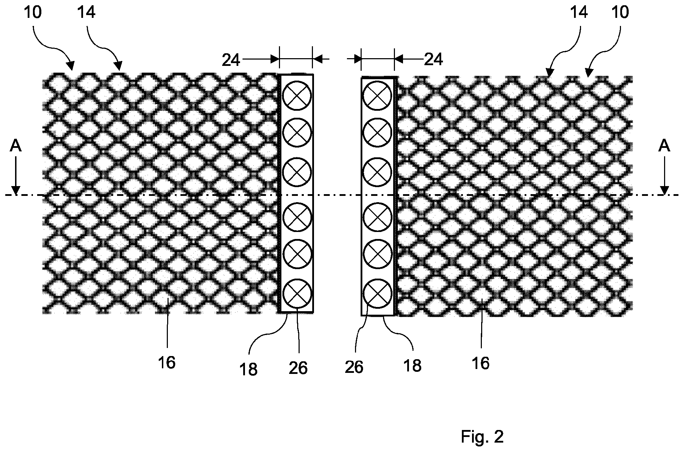

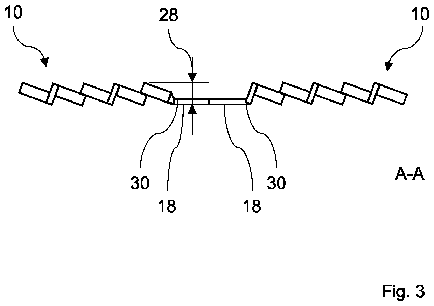

In Fig. 2 sind zwei Flachmaterialabschnitte 10 nebeneinander angeordnet gezeigt. Die Flachmaterialabschnitte 10 weisen je einen umgeformten Randbereich 18 mit einer Breite 24 von mindestens 2 mm auf, die in noch zu erläuternder Weise miteinander verschweißt werden. Zum Umformen der Randbereiche 18 wird Druck 26 (symbolisch in der Fig. 2 durch rückwärtig betrachtete Pfeile dargestellt) beispielsweise durch eine Walze orthogonal auf die Randbereiche 18 ausgeübt. In dem vorliegenden Ausführungsform wird der Druck 26 einseitig aufgebracht, bei Gegenhalten von einer der Druckeinwirkung gegenüberliegenden Seite des Randbereichs 18. Dabei wird eine Streckgitterstruktur 14 des Streckmetallgitters 12 in den Randbereichen 18 durch plastische Verformung nahezu aufgelöst. Vorliegend sind daher in den umgeformten Randbereichen 18 die vormaligen Öffnungen 16 der Streckgitterstruktur 14 im Wesentlichen und vorzugsweise vollständig geschlossen und in den Figuren bei den umgeformten Randbereichen 18 daher nicht mehr dargestellt. Eine Dicke 28 des umzuformenden Randbereichs 18 wird beim Umformen um wenigstens 50 % reduziert und der Randbereich 18 bildet vorliegend einseitig eine Abstufung 30 zu dem restlichen Flachmaterialabschnitt 10 (siehe Fig. 3).

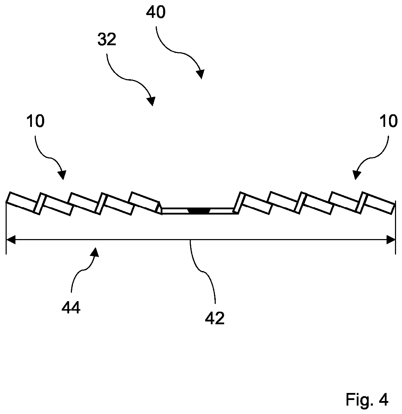

Ein weiterer Verfahrensschritt ist in Fig. 3 dargestellt. Gemäß einer ersten Ausführungsform werden die Flachmaterialabschnitte 10 mit ihren Randbereichen 18 auf Stoß aneinander angeordnet und in den Randbereichen 18, beispielsweise mittels Laserstrahlschweißen miteinander zu einer metallischen Trägerstruktur 32 verschweißt, wie es in Fig. 4 angedeutet ist.

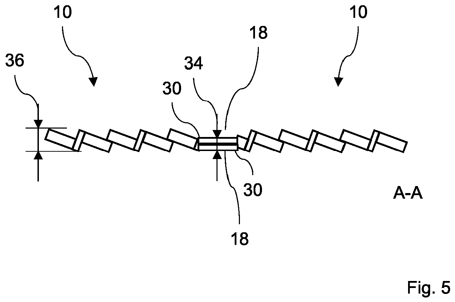

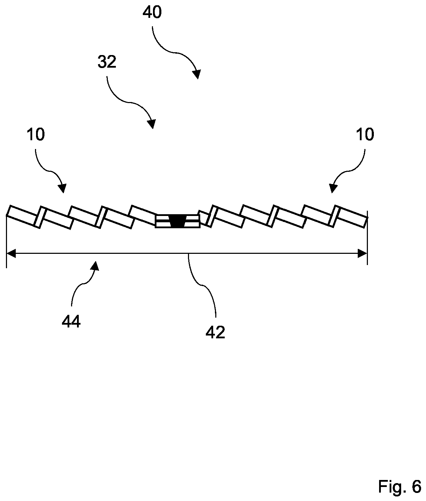

In Fig. 5 werden gemäß einer zweiten Ausführungsform die umgeformten, einseitig eine Abstufung 30 bildenden Randbereiche 18 der Flachmaterialabschnitte 10 derart ausgebildet und einander überlappend angeordnet, dass deren resultierende Gesamtdicke 34 nicht größer, als eine Dicke 36 unverformter Bereiche der Flachmaterialabschnitte 10 ist. Die einander überlappenden Randbereiche 18 werden miteinander zu der Trägerstruktur 32 verschweißt, wie es in Fig. 6 angedeutet ist.

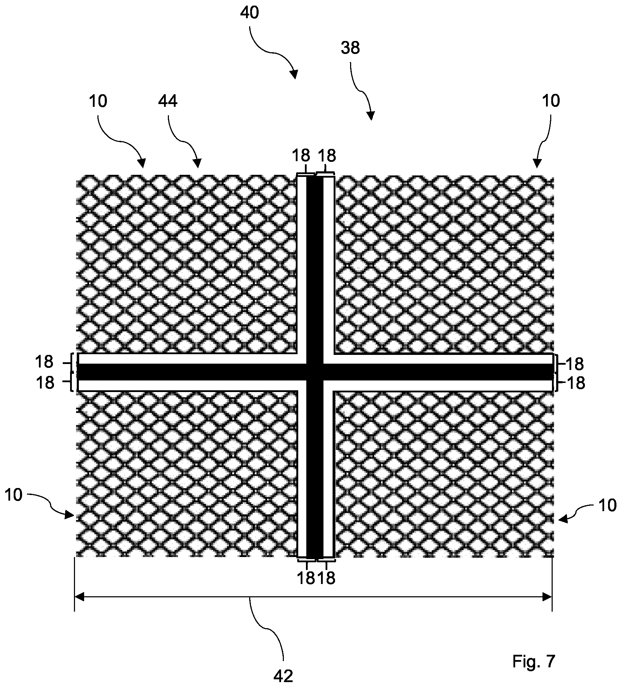

In Fig. 7 sind vier Flachmaterialabschnitte 10 dargestellt, die matrixartig mit jeweiligen umgeformten Randbereichen 18 aneinander geschweißt sind, und somit eine matrixartige metallische Trägerstruktur 38 bilden. Hierfür werden die Flachmaterialabschnitte 10 mit jeweils zwei aneinander anschließenden umgeformten Randbereichen 18 miteinander verschweißt. Die Darstellung einer 2x2 Matrixstruktur in Figur 7 ist rein beispielhaft, es könnten auch komplexere Trägerstrukturen und auch eine linienförmige Anordnung von aneinander geschweißten Flachmaterialabschnitten gebildet werden, was leicht vorstellbar und daher nicht dargestellt ist.

Die in Fig. 4, Fig. 6 und in Fig. 7 verschweißten Flachmaterialabschnitte 10 bilden eine metallische Trägerstruktur 32, 38 für eine Elektrode 40 mit einer Breite 42 von mindestens 0,8 m. Die Trägerstrukturen 32, 38 werden nach dem Verschweißen in den beispielhaften Ausführungsformen mit einer Ni-Legierung 44 beschichtet.

Das anhand von Flachmaterialabschnitten 10 des Streckmetallgitters 12 erläuterte Verfahren kann ebenso mit Flachmaterialabschnitten 10' des Drahtgewebes 20 durchgeführt werden.

## Patentansprüche

1. Verfahren zum Herstellen einer metallischen Trägerstruktur (32, 38) für eine Elektrode (40), wobei die Trägerstruktur (32, 38) aus Flachmaterialabschnitten (10, 10') eines Streckmetallgitters (12) oder Drahtgewebes (20) mit Öffnungen (16, 16') ausgebildet ist, wobei wenigstens zwei Flachmaterialabschnitte (10, 10') in einem jeweiligen Randbereich (18, 18') miteinander verschweißt werden, umfassend die folgenden Schritte:
Umformen der miteinander zu verschweißenden Randbereiche (18, 18') der Flachmaterialabschnitte (10, 10') durch Ausüben von Druck (26) orthogonal auf diese Randbereiche (18, 18'), insbesondere durch Walzen oder Prägen, um durch plastische Verformung in den Randbereichen (18, 18') eine Streckgitterstruktur (14) oder Gewebestruktur (22) zumindest nahezu aufzulösen, sodass die Öffnungen (16, 16') im Randbereich (18, 18') durch eine Materialverformung im Wesentlichen geschlossen werden,
Anordnen der Flachmaterialabschnitte (10, 10') aneinander, sodass die umgeformten Randbereiche (18, 18') der Flachmaterialabschnitte (10, 10') einander überlappen oder auf Stoß aneinander anliegen, und
Verschweißen der einander überlappenden oder auf Stoß aneinander anliegenden Randbereiche (18, 18') miteinander, um die Trägerstruktur (32 ,38) zu erhalten.

2. Verfahren nach Anspruch 1, **dadurch gekennzeichnet, dass** die Öffnungen (16, 16') des Streckmetallgitters (12) oder Drahtgewebes (20) vor dem Umformen bzw. außerhalb der Umformung bei Betrachtung orthogonal zur flächenhaften Erstreckung des Streckmetallgitters oder Drahtgewebes eine lichte Querschnittsfläche mit einer kleinsten Abmessung von wenigstens 1,0 mm, insbesondere von wenigstens 2,0 mm aufweisen.

3. Verfahren nach Anspruch 1 oder 2, **dadurch gekennzeichnet, dass** die miteinander zu verschweißenden Randbereiche (10, 10') eine Breite (24) von mindestens 2 mm, insbesondere mindestens 4 mm, insbesondere mindestens 6 mm oder insbesondere mindestens 8 mm und insbesondere höchstens 20 mm, insbesondere höchstens 15 mm, insbesondere höchstens 12 mm oder insbesondere höchstens 10 mm aufweisen.

4. Verfahren nach Anspruch 1, 2 oder 3, **dadurch gekennzeichnet, dass** das Verschweißen der Flachmaterialabschnitte (10, 10') mittels Laserstrahlschweißen oder Rollnahtschweißen durchgeführt wird.

5. Verfahren nach einem der vorstehenden Ansprüche, **dadurch gekennzeichnet, dass** eine Dicke (28) der umzuformenden und miteinander zu verschweißenden Randbereiche (18, 18') der Flachmaterialabschnitte (10, 10') beim Umformen um wenigstens 50 %, insbesondere wenigstens 60% reduziert wird.

6. Verfahren nach einem der vorstehenden Ansprüche, **dadurch gekennzeichnet, dass** die miteinander zu verschweißenden Randbereiche (18, 18') derart umgeformt werden, dass der umgeformte Randbereich (18, 18') zu einem restlichen Flachmaterialabschnitt (10, 10') einseitig eine Abstufung (30) bildet.

7. Verfahren nach Anspruch 6, **dadurch gekennzeichnet, dass** die umgeformten Randbereiche (18, 18') derart ausgebildet sind und aneinander überlappend angeordnet werden, dass deren resultierende Gesamtdicke (34) nicht größer ist, als eine Dicke (36) unverformter Bereiche der miteinander zu verschweißenden Flachmaterialabschnitte (10, 10').

8. Verfahren nach einem der vorstehenden Ansprüche, **dadurch gekennzeichnet, dass** mehrere Flachmaterialabschnitte (10, 10') matrixartig mit jeweiligen umgeformten Randbereichen (18, 18') aneinander geschweißt werden, sodass eine matrixartige metallische Trägerstruktur (38) erhalten wird.

9. Verfahren nach einem der vorstehenden Ansprüche, **dadurch gekennzeichnet, dass** die miteinander zu verschweißenden Flachmaterialabschnitte (10, 10') mit einer Ni-, insbesondere NiAl-Legierung (44) einseitig oder beidseitig beschichtet sind oder erst nach dem Umformen oder nach dem Verschweißen der Randbereiche (18, 18') beschichtet werden.

10. Metallische Trägerstruktur (32, 38) für eine Elektrode (40) hergestellt durch das Verfahren nach einem der Ansprüche 1-9 mit einer Breite (42) der miteinander verschweißten Flachmaterialabschnitte (10, 10') von mindestens 0,8 m, insbesondere mindestens 1,0 m, insbesondere mindestens 1,2 m.

11. Elektrode (40) mit einer metallischen Trägerstruktur (32, 38) nach Anspruch 10.

## Claims

1. Method for producing a metal support structure (32, 38) for an electrode (40), wherein the support structure (32, 38) is formed from flat material portions (10, 10') of an expanded metal grid (12) or wire mesh (20) having openings (16, 16'), wherein at least two flat material portions (10, 10') are welded together in a corresponding edge region (18, 18'), comprising the following steps:
working the edge regions (18, 18') of the flat material portions (10, 10') that are to be welded together by exerting pressure (26) orthogonally on these edge regions (18, 18'), in particular by rolling or
stamping, in order to at least almost break up an expanded metal structure (14) or mesh structure (22) by plastic deformation in the edge regions (18, 18'), so that the openings (16, 16') in the edge region (18, 18') are substantially closed by material deformation,
arranging the flat material portions (10, 10') next to one another so that the worked edge regions (18, 18') of the flat material portions (10, 10') overlap one another or abut one another, and
welding the overlapping or abutting edge regions (18, 18') together to obtain the support structure (32, 38).

2. Method according to claim 1, **characterized in that** the openings (16, 16') of the expanded metal grid (12) or wire mesh (20) have a clear cross-sectional area with a minimum dimension of at least 1.0 mm, in particular of at least 2.0 mm, before working or outside of working, when viewed orthogonally to the areal extension of the expanded metal grid or wire mesh.

3. Method according to claim 1 or 2, **characterized in that** the edge regions (10, 10') that are to be welded together have a width (24) of at least 2 mm, in particular at least 4 mm, in particular at least 6 mm or in particular at least 8 mm and in particular at most 20 mm, in particular at most 15 mm, in particular at most 12 mm or in particular at most 10 mm.

4. Method according to claim 1, 2 or 3, **characterized in that** the welding of the flat material portions (10, 10') is carried out by means of laser beam welding or roll seam welding.

5. Method according to any of the preceding claims, **characterized in that**, during working, a thickness (28) of the edge regions (18, 18') of the flat material portions (10, 10') that are to be worked and welded together is reduced by at least 50%, in particular at least 60%.

6. Method according to any of the preceding claims, **characterized in that** the edge regions (18, 18') that are to be welded together are worked in such a way that the worked edge region (18, 18') forms a step (30) on one side with respect to a remaining flat material portion (10, 10').

7. Method according to claim 6, **characterized in that** the worked edge regions (18, 18') are designed and arranged to overlap one another in such a way that their resulting total thickness (34) is no greater than a thickness (36) of undeformed regions of the flat material portions (10, 10') that are to be welded together.

8. Method according to any of the preceding claims, **characterized in that** a plurality of flat material portions (10, 10') are welded together in a matrix-like manner with respective edge regions (18, 18') so that a matrix-like metal support structure (38) is obtained.

9. Method according to any of the preceding claims, **characterized in that** the flat material portions (10, 10') that are to be welded together are coated on one or both sides with a Ni, in particular NiAl, alloy (44) or are only coated after working or after welding of the edge regions (18, 18').

10. Metal support structure (32, 38) for an electrode (40) produced by the method according to any of claims 1-9 with a width (42) of the flat material portions (10, 10') welded together of at least 0.8 m, in particular at least 1.0 m, in particular at least 1.2 m.

11. Electrode (40) comprising a metal support structure (32, 38) according to claim 10.

## Revendications

1. Procédé de fabrication d'une structure porteuse (32, 38) métallique pour une électrode (40), dans lequel la structure porteuse (32, 38) est réalisée à partir de sections formant matériaux plats (10, 10') d'une grille de métal déployé (12) ou d'un tissu métallique (20) comportant des ouvertures (16, 16'), dans lequel au moins deux sections formant matériaux plats (10, 10') sont soudées ensemble dans une zone marginale (18, 18') respective, comprenant les étapes suivantes:
formage des zones marginales (18, 18') à souder ensemble des sections formant matériaux plats (10, 10') en exerçant une pression (26) orthogonalement sur lesdites zones marginales (18, 18'), en particulier par laminage ou estampage, afin d'au moins presque défaire une structure formant grille de métal déployé (14) ou une structure formant tissu (22) par déformation plastique dans les zones marginales (18, 18'), de sorte que les ouvertures (16, 16') dans la zone marginale (18, 18') sont sensiblement fermées par une déformation de matériau,
disposition des sections formant matériaux plats (10, 10') l'une contre l'autre, de sorte que les zones marginales (18, 18') formées des sections formant matériaux plats (10, 10') se chevauchent l'une l'autre ou viennent en butée l'une contre l'autre, et
soudage des zones marginales (18, 18') se chevauchant ou en butée l'une contre l'autre afin d'obtenir la structure porteuse (32, 38).

2. Procédé selon la revendication 1, **caractérisé en ce que** les ouvertures (16, 16') de la grille de métal déployé (12) ou du tissu métallique (20) présentent, avant le formage ou en dehors du formage, vus orthogonalement à l'extension extensive de la grille de métal déployé ou du tissu métallique, une surface de section transversale libre comportant une dimension minimale d'au moins 1,0 mm, en particulier d'au moins 2,0 mm.

3. Procédé selon la revendication 1 ou 2, **caractérisé en ce que** les zones marginales (10, 10') à souder ensemble présentent une largeur (24) d'au moins 2 mm, en particulier d'au moins 4 mm, en particulier d'au moins 6 mm ou en particulier d'au moins 8 mm et en particulier d'au plus 20 mm, en particulier d'au plus 15 mm, en particulier d'au plus 12 mm ou en particulier d'au plus 10 mm.

4. Procédé selon la revendication 1, 2 ou 3, **caractérisé en ce que** le soudage des sections formant matériaux plats (10, 10') est mis en œuvre au moyen d'un soudage au laser ou d'un soudage à molettes.

5. Procédé selon l'une des revendications précédentes, **caractérisé en ce qu'**une épaisseur (28) des zones marginales (18, 18') des sections formant matériaux plats (10, 10') à former et à souder ensemble est réduite d'au moins 50 %, en particulier d'au moins 60 %, lors du formage.

6. Procédé selon l'une des revendications précédentes, **caractérisé en ce que** les zones marginales (18, 18') à souder ensemble sont formées de telle sorte que la zone marginale (18, 18') formée réalise un échelonnement (30) d'un côté par rapport à une section formant matériau plat (10, 10') restante.

7. Procédé selon la revendication 6, **caractérisé en ce que** les zones marginales (18, 18') formées sont réalisées et disposées en se chevauchant l'une l'autre de telle sorte que leur épaisseur totale (34) résultante n'est pas supérieure à une épaisseur (36) de zones non déformées des sections formant matériaux plats (10, 10') à souder ensemble.

8. Procédé selon l'une des revendications précédentes, **caractérisé en ce que** plusieurs sections formant matériaux plats (10, 10') sont soudées ensemble à la manière d'une matrice avec des zones marginales (18, 18') respectives déformées, de sorte qu'une structure porteuse (38) métallique à la manière d'une matrice est obtenue.

9. Procédé selon l'une des revendications précédentes, **caractérisé en ce que** les sections formant matériaux plats (10, 10') à souder ensemble sont revêtues d'un côté ou des deux côtés d'un alliage de nickel, en particulier de nickel-aluminium (44), ou sont revêtues uniquement après le formage ou après le soudage des zones marginales (18, 18').

10. Structure porteuse (32, 38) métallique pour une électrode (40) fabriquée par le procédé selon l'une des revendications 1 à 9, comportant une largeur (42) des sections formant matériaux plats (10, 10') soudées ensemble d'au moins 0,8 m, en particulier d'au moins 1,0 m, en particulier d'au moins 1,2 m.

11. Électrode (40) comportant une structure porteuse (32, 38) métallique selon la revendication 10.
